# EUROPÄISCHE PATENTSCHRIFT

(11) **EP 1 980 009 B1**
(45) Veröffentlichungstag und Bekanntmachung des Hinweises auf die Patenterteilung: **11.07.2018**
(21) Anmeldenummer: 07712003.8
(22) Anmeldetag: 05.01.2007
(51) Int. Cl.: H02K 3/50

(54) **SCHWINGUNGSDÄMPFUNGSSYSTEM FÜR EINEN STATOR EINER ELEKTRISCHEN MASCHINE**
OSCILLATION DAMPING SYSTEM FOR A STATOR OF AN ELECTRICAL MACHINE
SYSTEME D'AMORTISSEMENT DES VIBRATIONS POUR LE STATOR D'UNE MACHINE ELECTRIQUE

(30) Priorität: 31.01.2006 EP 06001998
(43) Veröffentlichungstag der Anmeldung: 15.10.2008
(73) Patentinhaber: Siemens Aktiengesellschaft, 80333 München (DE)
(72) Erfinder: BECK, Ronald, 89522 Heidenheim (DE); EHEHALT, Ulrich, 45131 Essen (DE); KOWALSKI, Waldemar, 45472 Mülheim an der Ruhr (DE); LEHMANN, Christoph, 47506 Neukirchen-Vluyn (DE); RICHTER, Christoph, 49477 Ibbenbüren (DE); SPIESS, Karlheinz, 47445 Moers (DE)
(86) Internationale Anmeldenummer: PCT/EP2007/050102
(87) Internationale Veröffentlichungsnummer: WO 2007/088085

(56) Entgegenhaltungen:
- EP-A1- 0 691 728
- EP-B1- 0 950 279
- DE-A1- 19 755 569
- GB-A- 1 409 236
- US-A- 3 924 149

## Beschreibung

Die Erfindung betrifft ein Schwingungsdämpfungssystem für einen Stator einer elektrischen Maschine, insbesondere eines Generators. Ein solches System ist beispielsweise aus der EP 0 950 279 B1 bekannt.

Das System nach der EP 0 950 279 B1 verfolgt den Ansatz, die Eigenfrequenz der Wicklungen eines Stators durch geeignete mechanische Belastung der an einer Wicklungsabstützungsstrebe gehaltenen Statorwicklungen auf ein ausreichend hohes Maß einzustellen. Zu diesem Zweck umfasst das Schwingungsdämpfungssystem einen zwischen der Wicklungsabstützungsstrebe und den Wicklungen angeordneten Schubblock sowie mehrere die Wicklungen belastende Federn. Auf eine Phasenbeziehung zwischen Eigenschwingungen des Stators und sonstigen in der elektrischen Maschine auftretenden Schwingungen wird in der EP 0 950 279 B1 nicht eingegangen.

Die US 3 924 149 offenbart einen Stützring eines Statorwickelkopfs. Die Enden des Stützrings sind an einer Stelle des Statorumfangs miteinander verschraubt. Die Verschraubung stellt ein asymmetrisches Gewicht als integralen Teil des Stützrings dar.

Der Erfindung liegt die Aufgabe zugrunde, ein Schwingungsdämpfungssystem für einen Stator einer elektrischen Maschine, insbesondere für einen Wickelkopf eines Generators, anzugeben, welches besonders wirksam ist.

Diese Aufgabe wird erfindungsgemäß gelöst durch ein Schwingungsdämpfungssystem mit den Merkmalen des Anspruchs 1.

Es wird von der Überlegung ausgegangen, dass die magnetischen Kräfte im Stator die Form einer umlaufenden Welle beschreiben. Diese Welle weist mehrere Knoten auf, deren Anzahl von der Wicklungsart abhängt, und läuft mit der Rotordrehzahl um. Bei einem eine zyklisch periodische Form aufweisenden Wicklungskopf des Stators könnte sich eine mechanische Schwingung ausbilden, die eine der umlaufenden Welle entsprechende Anzahl an Knoten hat. Abhängig von den durch die Bauart des Stators gegebenen Resonanzeigenschaften würde sich der Stator durch die periodische Anregung aufschwingen, was im Extremfall zur Zerstörung von Bauteilen führen kann. Allgemein kann jedes Erregungsmuster Energie in eine Eigenschwingung einbringen, dessen Kraftmuster nicht-orthogonal zur Eigenschwingungsform ist.

Um eine solche Anregung der Eigenschwingungen zu vermeiden, ist beim gemäß der Erfindung ausgebildeten Stator die zyklische Periodizität eines tragenden Bauteils, insbesondere eines Stützbauteils des Wicklungskopfes, gezielt gestört. Dies ist beispielsweise durch eine keinem Symmetriemuster folgende Verteilung von Massen realisiert. In jedem Fall ist dadurch eine zumindest annähernde Orthogonalität zwischen Eigenschwingung und anregender Kraft erreichbar. Auf diese Weise ist das Skalarprodukt zwischen der Eigenform der Schwingung und dem Anregungsmuster minimiert. Eine Energieübertragung von der auf die magnetischen Kräfte zurückzuführenden umlaufenden Welle auf den als schwingungsfähiges System betrachteten Stator ist somit höchstens in sehr geringem Maß möglich. Letztlich führen anregende periodische Belastungen, die auf den Stromfluss im Stator zurückzuführen sind, zu keinen relevanten Zusatzbeanspruchungen von Bauteilen des Stators.

Unabhängig davon, ob die Unsymmetrie des Stützbauteils durch die Art der Anbindung an eine zumindest näherungsweise starre Umgebungskonstruktion und/oder durch die Massenverteilung am Stützbauteil gegeben ist, weisen hierdurch Eigenschwingungen des Stators in Relation zu anregenden Schwingungen des rotierenden Bauteils der elektrischen Maschine eine Modeformverstimmung auf. Als anregende Schwingungen des rotierenden Bauteils werden zwischen Rotor und Stator wirkende, sich zyklisch ändernde elektromagnetische Kräfte bezeichnet, deren Frequenz der Rotordrehzahl entspricht.

Ein gesondertes Dämpfungselement ist nicht notwendigerweise Bestandteil des Schwingungsdämpfungssystems. Um besonders ausgeprägte schwingungstilgende Eigenschaften zu erzielen, ist es jedoch in vorteilhafter Ausgestaltung möglich, das Schwingungsdämpfungssystem mit einem zusätzlichen Dämpfungssystem, insbesondere mit einem aktiven Dämpfungssystem, dessen Eigenschaften steuerbar sind, zu kombinieren.

In jedem Fall ist durch die systemimmanente Unterdrückung von Vibrationen im Stator, insbesondere im Statorwickelkopf, dessen mechanische Beanspruchung verringert und damit dessen Lebensdauer verlängert. Insbesondere wird die Bildung von Reibstaub vermieden sowie die Lösung des Wickelkopfverbandes des Stators verhindert.

Der Vorteil der Erfindung liegt insbesondere darin, dass in einer elektrischen Maschine mit einem rotierenden Bauteil schwingungstilgende Eigenschaften eines Stators durch die unsymmetrische Geometrie und/oder Befestigung eines Statorwicklungen tragenden Stützbauteils erzielt werden, wodurch ein passiv wirksames und damit äußerst robustes System zur Unterdrückung von Schwingungen gegeben ist.

Nachfolgend werden mehrere Ausführungsbeispiele der Erfindung anhand einer Zeichnung näher erläutert. Hierin zeigen jeweils in symbolisierter Darstellung:
- FIG 1: in einer Prinzipdarstellung einen Stator einer elektrischen Maschine mit einem schwingungstilgenden Stützbauteil, und
- Fig.2 und 4: jeweils ein Beispiel, das nicht Teil der Erfindung ist, und
- Fig.3: eine Ausführungsform eines schwingungstilgenden Wickelkopfes eines Stators.

Einander entsprechende oder gleichwirkende Teile sind in allen Figuren mit den gleichen Bezugszeichen gekennzeichnet.

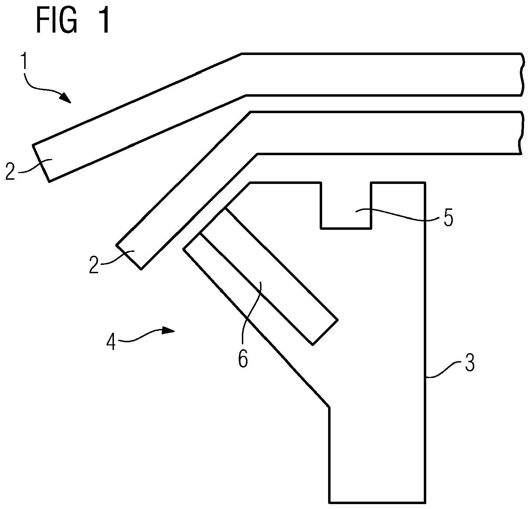

In FIG 1 ist grob schematisiert ein Ausschnitt aus einem Stator 1 eines Generators, nämlich ein Teil des Wickelkopfes 4 des Stators 1, dargestellt. Hinsichtlich des prinzipiellen Aufbaus sowie der Funktion des Stators 1 wird auf die EP 0 950 279 B1 verwiesen. Eine Wicklung 2 ist auf einem Stützbauteil 3 gehalten. Abweichend von der symbolisierten Darstellung sind die Teile 2,3 des Wickelkopfes 4 des Stators 1 kraftübertragend miteinander gekoppelt.

Zwischen der Wicklung 2 und einem nicht dargestellten Rotor des Generators wirken bei dessen Betrieb elektromagnetische Kräfte, welche eine Welle darstellen, die entsprechend der Drehzahl des Rotors umläuft und eine Anzahl an Knoten aufweist, die von der Bauart des Generators abhängt. Im Fall einer - hier nicht gegebenen - zyklisch periodischen Form des Wickelkopfes 4 könnte sich bei Erfüllung gegebener Resonanzbedingungen eine mechanische Schwingung im Wickelkopf 4 ausbilden, welche ebenfalls Knoten - in einer der anregenden Schwingung entsprechenden Zahl - aufweist.

Das Auftreten einer derartigen Resonanz wird durch eine gezielte Störung der zyklischen Periodizität des Wickelkopfes 4 verhindert, wobei schwingungstilgende Eigenschaften des Stators 1 durch die unsymmetrische, insbesondere keine Rotationssymmetrie aufweisende, Form des Stützbauteils 3 des Stators 1 gegeben sind. Sowohl eine Aussparung 5 als auch eine verstärkende Leiste 6 bilden Statorschwingungen entgegenwirkende Elemente.

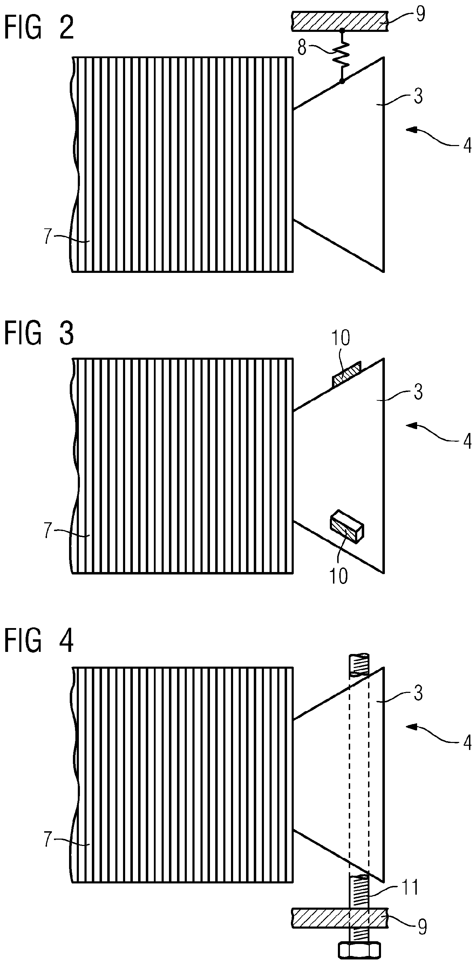

Verschiedene konkrete Bauformen schwingungstilgend gestalteter elektrischer Maschinen, nämlich Generatoren, werden im Folgenden anhand der Figuren 2 bis 4 erläutert, wobei die Wicklung 2 des Wickelkopfes 4 der Übersichtlichkeit halber nicht dargestellt ist und die Figuren 2 und 4 nicht Teil der Erfindung sind.

Im Beispiel nach Figur 2 ist der an ein Blechpaket 7 anschließende Wickelkopf 4 des Stators 1 mittels eines Federelementes 8 elastisch an ein ortsfestes Bauteil 9, nämlich ein Gehäuse des Stators 1, angebunden. Sofern in nicht aus der Darstellung ersichtlicher Weise mehrere Federelemente 8, welche bevorzugt auch dämpfende Eigenschaften haben, zur Verbindung des Wickelkopfes 4 mit dem Gehäuse 9 vorgesehen sind, sind die Punkte, an denen die Federelemente 8 Kräfte in das Stützbauteil 3 des Wickelkopfes 4 einleiten, unsymmetrisch am Wickelkopf 4 verteilt. Vorzugsweise sind die mechanischen Eigenschaften des mindestens einen Federelementes 8 fernbetätigt verstellbar. Auf diese Weise sind die Eigenschwingungen des Wickelkopfes 4 während des Betriebs des Generators maximal schwingungsdämpfend einstellbar. Die Ausführungsform nach Figur 3 zeigt einen Wickelkopf 4 mit an diesem befestigten Zusatzgewichten 10, welche in unsymmetrischer Verteilung am Umfang des Wickelkopfes 4 angeordnet sind. Die Zusatzgewichte 10 sind bei Stillstand des Generators je nach Bedarf austauschbar oder an anderer Stelle des Stützbauteils 3 befestigbar, um die Schwingungseigenschaften des Wickelkopfes 4 in gewünschter Weise einzustellen. In jedem Fall wird eine Statorschwingungen unterdrückende Wirkung durch gezielt eingebrachte Unsymmetrien erreicht. In nicht dargestellter Weise kann der Wickelkopf 4 zusätzlich Aussparungen 5 (s. FIG 1) aufweisen, deren Geometrie vorzugsweise gleichzeitig genutzt wird, um Leitungen, die den im Generator erzeugten Strom abnehmen, zu führen.

Im Ausführungsbeispiel nach Figur 4 ist der Wickelkopf 4 des Generators mittels einer im Wesentlichen bolzenförmigen Stützkonstruktion 11 mit dem Gehäuse 9 verspant. Im Vergleich mit dem Beispiel nach Figur 2 (s. Federelement 8) ist die Stützkonstruktion 11 deutlich steifer ausgelegt und erfüllt auch eine statische Funktion. Zugleich weist die Stützkonstruktion 11 elastische Eigenschaften auf, wodurch die Schwingungseigenschaften des Stators 1 in relevanter Weise geändert werden, das heißt, ebenso wie in den anderen Beispielen und Ausführungsformen eine Modeformverstimmung der Statorschwingungen erzielt wird.

## Patentansprüche

1. Schwingungsdämpfungssystem eines Stators (1) einer elektrischen Maschine mit einem rotierenden Bauteil,
wobei eine Wicklung (2) an einem Stützbauteil (3) des Stators (1) gehalten ist,
wobei zumindest eines der Konstruktionsmerkmale Form und Befestigung des Stützbauteils (3) eine bei periodischer Anregung des Stators (1) durch das rotierende Bauteil der elektrischen Maschine schwingungstilgend wirkende Unsymmetrie aufweist,
**dadurch gekennzeichnet, dass**
am Stützbauteil (3) mindestens ein Zusatzgewicht (10) zur Erzeugung einer Unsymmetrie des Stators bezüglich der Rotationsrichtung des rotierenden Bauteils (1) befestigt ist.

2. Schwingungsdämpfungssystem nach Anspruch 1,
**dadurch gekennzeichnet, dass**
ein Wickelkopf (4) des Stators (1) unsymmetrisch und dadurch schwingungstilgend aufgebaut ist.

3. Schwingungsdämpfungssystem nach Anspruch 1 oder 2,
**dadurch gekennzeichnet, dass**
die Unsymmetrie des Stützbauteils (3) derart eingestellt ist, dass ein Eigenschwingung des Stators (1) in Relation zu einer anregenden Schwingungen des rotierenden Bauteils der elektrischen Maschine eine Modeformverstimmung aufweist.

4. Schwingungsdämpfungssystem nach Anspruch 3,
**dadurch gekennzeichnet, dass**
eine Eigenschwingung des Stators (1) zumindest annähernd orthogonal zu einer anregenden Schwingung des rotierenden Bauteils der elektrischen Maschine ist.

## Claims

1. Oscillation damping system of a stator (1) of an electrical machine having a rotating component, with a winding (2) being held on a supporting component (3) of the stator (1), wherein at least one of the design features comprising the form and attachment of the supporting component (3) has an asymmetry which acts to damp oscillations when the stator (1) is cyclically excited by the rotating component of the electrical machine,
**characterized in that**
at least one additional weight (10) is attached to the supporting component (3) in order to produce an asymmetry of the stator (1) in relation to the direction of rotation of the rotating component.

2. Oscillation damping system according to Claim 1,
**characterized in that**
an end winding (4) of the stator (1) is designed to be asymmetric, and therefore to damp oscillations.

3. Oscillation damping system according to Claim 1 or 2,
**characterized in that**
the asymmetry of the supporting component (3) is adjusted such that a natural oscillation of the stator (1) in relation to exciting oscillations of the rotating component of the electrical machine has a mode-form mismatch.

4. Oscillation damping system according to Claim 3,
**characterized in that**
a natural oscillation of the stator (1) is at least approximately orthogonal to an exciting oscillation of the rotating component of the electrical machine.

## Revendications

1. Système d'amortissement des vibrations d'un stator (1) d'une machine électrique avec une pièce rotative,
dans lequel un enroulement (2) est maintenu sur une pièce de support (3) du stator (1),
dans lequel au moins l'une des caractéristiques de conception de forme et de fixation de la pièce de support (3) présente une dissymétrie agissant par absorption des vibrations lors de l'excitation périodique du stator (1) par la pièce rotative de la machine électrique,
**caractérisé en ce que**
sur la pièce de support (3) est fixé au moins un poids supplémentaire (10) pour la création d'une dissymétrie du stator par rapport au sens de rotation de la pièce rotative (1).

2. Système d'amortissement des vibrations selon la revendication 1,
**caractérisé en ce que**
une tête d'enroulement (4) du stator (1) est conçue de manière dissymétrique et de manière à absorber ainsi les vibrations.

3. Système d'amortissement des vibrations selon la revendication 1 ou la revendication 2,
**caractérisé en ce que**
la dissymétrie de la pièce de support (3) est ajustée de telle sorte qu'une vibration propre du stator (1) présente un désaccord de forme de mode en relation avec une vibration d'excitation de la pièce rotative de la machine électrique.

4. Système d'amortissement des vibrations selon la revendication 3,
**caractérisé en ce que**
une vibration propre du stator (1) est au moins approximativement orthogonale à une vibration d'excitation de la pièce rotative de la machine électrique.
